# EUROPEAN PATENT SPECIFICATION

(11) **EP 2 526 047 B1**
(45) Date of publication and mention of the grant of the patent: **23.08.2017**
(21) Application number: 11700536.3
(22) Date of filing: 14.01.2011
(51) Int. Cl.: C01B 11/02

(54) **PROCESS FOR THE PRODUCTION OF CHLORINE DIOXIDE**
VERFAHREN ZUR HERSTELLUNG VON CHLORDIOXID
PROCÉDÉ DE PRODUCTION DE DIOXYDE DE CHLORE

(30) Priority: 18.01.2010 US 295881 P; 18.01.2010 EP 10150944
(43) Date of publication of application: 28.11.2012
(73) Proprietor: Akzo Nobel Chemicals International B.V., 6824 BM Arnhem (NL)
(72) Inventor: PELIN, Kalle Hans Thomas, S-442 53 Ytterby (SE)
(74) Representative: Akzo Nobel IP Department
(86) International application number: PCT/EP2011/050430
(87) International publication number: WO 2011/086147

(56) References cited:
- WO-A1-97/30931
- GB-A- 2 051 758
- US-A- 4 325 934
- US-A- 4 925 645
- US-A- 5 009 875
- US-A- 5 145 660
- US-A- 5 324 497
- US-A- 5 458 858
- US-A1- 2007 104 637
- Magda Medir ET AL: "Stability of chlorine dioxide in aqueous solution", WATER RESEARCH., vol. 16, no. 9, 1 January 1982 (1982-01-01), pages 1379-1382, XP055311958, NL ISSN: 0043-1354, DOI: 10.1016/0043-1354(82)90221-4

## Description

The invention relates to a process for the production of chlorine dioxide.

There are numerous different processes for chlorine dioxide production. Most large scale processes in commercial use are run at pulp mills and involve continuous reaction of alkali metal chlorate in an acidic aqueous reaction medium with a reducing agent such as hydrogen peroxide, methanol, chloride ions or sulfur dioxide to form chlorine dioxide that is withdrawn as a gas from the reaction medium and then absorbed in water that is brought to a storage tank before being used in the final application, usually pulp bleaching. An overview of such processes can be found in Ullmann's Encyclopedia of Industrial Chemistry, Chlorine Oxides and Chlorine Oxygen Acids, DOI: 10.1002/14356007.a06_483.pub2, Article Online Posting Date: April 15, 2010, p. 17-25.

In one kind of processes the reaction medium is maintained in a single reaction vessel under boiling conditions at subatmospheric pressure, wherein alkali metal salt of the acid is precipitated and withdrawn as a salt cake. Examples of such processes are described in US patents 5091166, 5091167, 5366714 and 5770171, and in WO 2006/062455. The salt cake may also be washed with water or another solvent, as described in e.g. US patents 5674466 and 6585950.

In another kind of processes the reaction medium is maintained under non-crystallising conditions, generally at substantially atmospheric pressure. In most cases depleted reaction medium from a first reaction vessel is brought to a second reaction vessel for further reactions to produce chlorine dioxide. Depleted reaction medium withdrawn from the final reaction vessel, usually referred to as residual acid, contains acid, alkali metal salt of the acid and normally some unreacted alkali metal chlorate. The residual acid may sometimes, at least partly, be used in the pulping process. Examples of non-crystallising chlorine dioxide generation processes are described in EP 612686, WO 2006/033609, JP 03-115102 and JP 88-008203.

It has also been disclosed to treat depleted reaction medium or dissolved salt cake electrochemically, as described in e.g. US patents 4129484, 5478446, 5487881, 5858322 and 6322690.

In processes for small scale generation of chlorine dioxide, such as for water purification applications or small bleaching plants, the chlorine dioxide is usually not separated from the aqueous reaction medium in the reactor. Instead, a product stream comprising chlorine dioxide, salt, excess acid and optionally un-reacted chlorate is withdrawn from the reactor and usually diluted in an eductor or an absorption tower. The diluted product stream may be used directly or after separation of gaseous and liquid component. Examples of such processes are described in US patents 2833624, 4534952, 5895638, 6387344, 6790427 and in US patent applications Publ. No. 2004/0175322, Publ. No. 2003/0031621, Publ. No. 2005/0186131 and Publ. No. 2006/0133983, Publ. No. 2007-0116637 and Publ. No. 2007-0237708. US 4 325 934 A discloses a process for the production of chlorine dioxide by reducing chlorate ions in an acidic aqueous reaction medium using methanol as a reducing agent, the process comprising formation of an aqueous solution comprising chlorine dioxide by withdrawing gas comprising chlorine dioxide from the aqueous reaction medium and absorbing chlorine dioxide from the chlorine dioxide comprising gas into water, and bringing the aqueous solution comprising chlorine dioxide to its end-application, i.e. bleaching wood pulp or any other desired end use.

It is usually difficult to control the production rate of chlorine dioxide sufficiently rapidly to meet variations in the demand, particularly for large scale units such as those delivering chlorine dioxide to bleach plants at pulp mills. Further, interruptions in the chlorine dioxide production may occur, while it is very difficult and costly to quickly stop a bleach plant in which the chlorine dioxide is used. For these reasons a relatively large storage tank is normally used, typically equal to 6-14 hours of operation. However, in the storage tank there are losses of chlorine dioxide from chemical reactions and degassing. The latter may be recovered but losses due to chemical reactions are usually larger and not recoverable.

It has been found that the rate of loss of chlorine dioxide is not linear in time in a storage tank, but instead the rate of loss is decreasing in time. Thus, most of the loss occurs in the first period of storage, i.e. the first few hours. Hence, by decreasing the storage time the losses will be lower, and ultimately having no storage time, will minimise the losses to those unavoidably occurring in the pipeline to the end-application. On the other hand, when a chlorine dioxide solution is stored during longer periods of time, e.g. for weeks, the rate of loss becomes smaller and smaller. Considering these findings, it has been found possible to provide a process for the production of chlorine dioxide that still may meet variations in the demand, fluctuations in the process and requirement for storage, but with lower overall loss of chlorine dioxide.

It has further been found that the rate of loss of chlorine dioxide in an aqueous solution is a function of the concentration of chlorine dioxide, concentration and type of impurities and of the temperature. Thus, the less impurities and the cooler the solution, the more stable it can be expected to be.

Thus, the invention concerns a process according to claim 1. Since at least a part of the aqueous solution comprising chlorine dioxide has a very short residence time, the loss of chlorine dioxide can be minimised.

The aqueous solution comprising chlorine dioxide may hereinafter be referred to as chlorine dioxide water. However, it should be understood that the chlorine dioxide water may also comprise other components, such as by-products from the chlorine dioxide production or other impurities, for example coming from raw materials like process water used in absorbing chlorine dioxide.

Chlorine dioxide water that is brought to the end-application within an average residence time of less than 30 minutes may hereinafter be referred to as chlorine dioxide water brought directly to the end-application. The average residence time is counted from the formation of the aqueous solution comprising chlorine dioxide, for example in an absorber, till it is used in the end-application. The average residence time is preferably less than 15 minutes or even less than 10 minutes. It is advantageous with as low residence time as possible, but for practical reasons it is usually at least 1 minute or at least 5 minutes, depending on e.g. the length of the piping etc.

The end-application of the chlorine dioxide may, for example, be bleaching or water purification. The invention is particularly advantageous in case the chlorine dioxide is produced in large scale, for example from 2 to 100 tonnes per day, which is common when used for pulp bleaching.

The process is preferably operated continuously. Chlorine dioxide water that is obtained but not brought directly to the end-application is brought to the at least one storage tank.

The purification comprises stripping off chlorine dioxide gas from the aqueous solution, for example by blowing air or any other inert gas, and then absorbing the chlorine dioxide into water to obtain a purified aqueous solution that is brought to the at least one storage tank.

The purification may also comprise increasing the pH of the aqueous solution, for example up to the range from 6 to 8, prior to the stripping. The pH can be increased by adding any kind of alkaline substance, for example alkali metal hydroxide like sodium hydroxide.

By purifying the aqueous solution the storage stability can be increased. Examples of impurities that can be removed include formic acid, elemental chlorine, inorganic salts etc.

In case more than one storage tank is used, purified aqueous solution comprising chlorine dioxide may be brought to a first storage tank while none purified aqueous solution may be brought to a second and optionally further storage tanks. The chlorine dioxide in the first storage tank will then have very high storage stability and may primarily be used in case of longer interruptions in the chlorine dioxide production, while the chlorine dioxide in the second and/or further storage tanks may be used for taking up variations in the demand and the production. The chlorine dioxide in the first storage tank may also be used for applications requiring very pure chlorine dioxide.

The at least one storage tank preferably has a total size corresponding to from 6 to 14 hours total consumption in the end-application. The process may, for example, be operated so the average residence time in the at least one storage tank is from 1 day to 8 weeks or more, or from 1 week to 5 weeks. A long residence time in the storage tank is advantageous since most of the chlorine dioxide produced then can be brought to the end application without unnecessary delay.

Since the inflow of chlorine dioxide water to the at least one storage tank in most cases is comparatively very low, it may be kept at a low temperature with less energy consumption than in conventional production plants in which all chlorine dioxide water produced is brought to at least one storage tank. Thus, the chlorine dioxide water in the at least one storage tank is maintained at a lower temperature than the temperature of the chlorine dioxide water brought thereto. For example, the temperature in the at least one storage tank may be maintained from 0 to 12°C or from 2 to 4°C. The appropriate number of storage tanks depends on the chlorine dioxide production capacity and may, for example, be from 1 to 4, such as 2 or 3.

One possible mode of operation comprises bringing the aqueous solution comprising chlorine dioxide to a pump tank, bringing at least part of the aqueous solution from the pump tank to the end application and, depending on the actual demand, bringing part of the aqueous solution from the pump tank to the at least one storage tank. The average residence time in the pump tank is preferably shorter than in the at least one storage tank and may, for example, be from 1 to 40 minutes or from 2 to 20 minutes. As the residence time is short, there is usually no need to further cool the aqueous solution therein. In this mode of operation the total average residence for the chlorine dioxide water brought directly to the end-application will in most cases be the average residence time in the pump tank plus the average residence time in the pipelines to the end-application.

The formation of the aqueous solution comprising chlorine dioxide comprises reducing chlorate ions with methanol in an acidic aqueous reaction medium to form chlorine dioxide. The reaction medium may, for example, have an acidity from 0.5 to 14 N. When methanol is used as a reducing agent, alone or in mixture with any other reducing agent, by-products may then be formed that may react with the chlorine dioxide when stored. The chlorate ions may be provided by continuously feeding to the reaction medium alkali metal chlorate like sodium chlorate, chloric acid or any mixture thereof. The acid may be provided by continuously feeding to the reaction medium a mineral acid such as sulfuric acid, hydrochloric acid, chloric acid or any mixture thereof.

In an embodiment, the formation of the aqueous solution comprising chlorine dioxide further comprises withdrawing gas comprising chlorine dioxide from the aqueous reaction medium and absorbing chlorine dioxide from said gas into water. Since a significant part of the aqueous solution comprising chlorine dioxide will not be stored for a significant period of time, it is not necessary to keep the water used for absorbing the chlorine dioxide as cold as in conventional processes, thus saving part of the energy otherwise required for cooling in cases the incoming process water has a higher temperature. The temperature of the water used for absorbing chlorine dioxide may, for example, be from 0 to 16°C or from 4 to 12°C.

All process steps required for the formation of the aqueous solution comprising chlorine dioxide may be run as described in the earlier mentioned publications and as in commercial processes such as SVP-LITE^{®}, SVP-HP^{®}, SVP^{®}-SCW, SVP^{®}-HClO₃, SVP^{®} Total HCl, HP-A^{®}, Mathieson, Solvay, R2, R3, R8, R10 and integrated chlorine dioxide/chlorate processes. Thus, the chlorine dioxide may be formed in single vessel processes operated at subatmospheric pressure and crystallising conditions, as well as in processes operated at substantially atmospheric pressure and non-crystallising conditions.

In an embodiment of the invention the process is run under crystallising conditions. One mode of operating such a process is described below:
A reaction medium is maintained in a reaction vessel under sub-atmospheric pressure, usually from about 8 to about 80 kPa absolute. The reaction medium is circulated through a circulation conduit and a heater (commonly called "reboiler") and back to the reaction vessel at a rate sufficient for keeping the temperature of the reaction medium at the boiling point, usually from about 15 to about 100°C, depending on the pressure. Feed streams of aqueous sodium chlorate, an acid like sulfuric acid or hydrochloric acid and a reducing agent as methanol are fed to various points of the circulation conduit, but may, if appropriate, also be fed directly to the reaction vessel. It is also possible to pre-mix one or more of the feed streams. The concentration of chlorate maintained in the reaction medium may vary within wide limits, for example from about 0.25 moles/litre up to saturation. The acidity of the reaction medium is preferably maintained from about 0.5 to about 12 N. In the reaction medium sodium chlorate, reducing agent and the acid react to form chlorine dioxide, sodium salt of the acid (e.g. sodium sulfate) and optionally other by-products, depending on the reducing agent used. Chlorine dioxide and other gaseous products are withdrawn as a gas together with evaporated water. Sodium salt of the acid precipitates as a substantially neutral or acidic salt, depending on the acidity of the reaction medium, and is withdrawn as a salt cake, (e.g. Na₂SO₄ (s) or Na₃H(SO₄)₂(s)), by circulating reaction medium through a filter. The gas withdrawn from the reaction vessel is brought to a cooler and then an absorber supplied with water dissolving the chlorine dioxide to form chlorine dioxide water while non-dissolved gaseous components are withdrawn as gas. At least part of the chlorine dioxide water obtained in the absorber is brought to the end-application within an average residence time of less than 30 minutes.

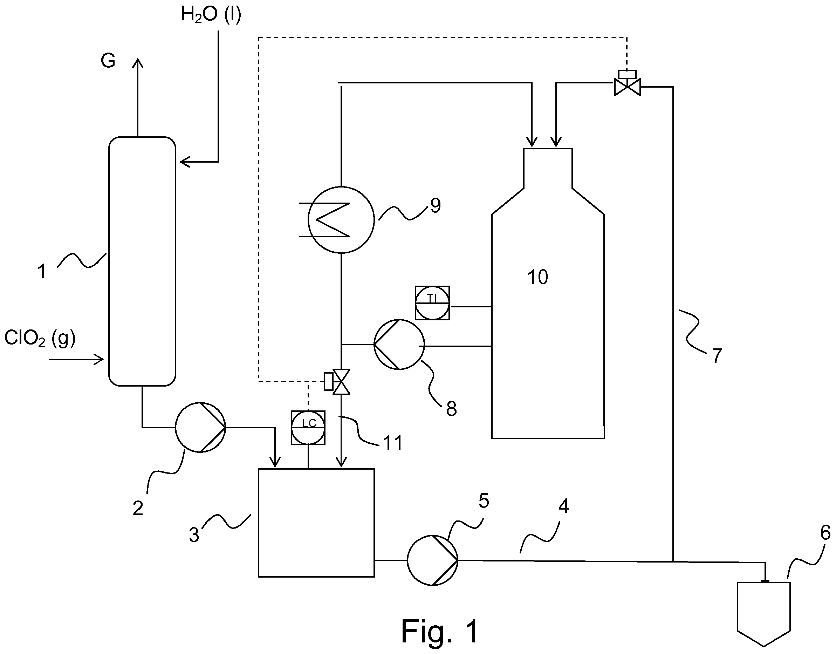

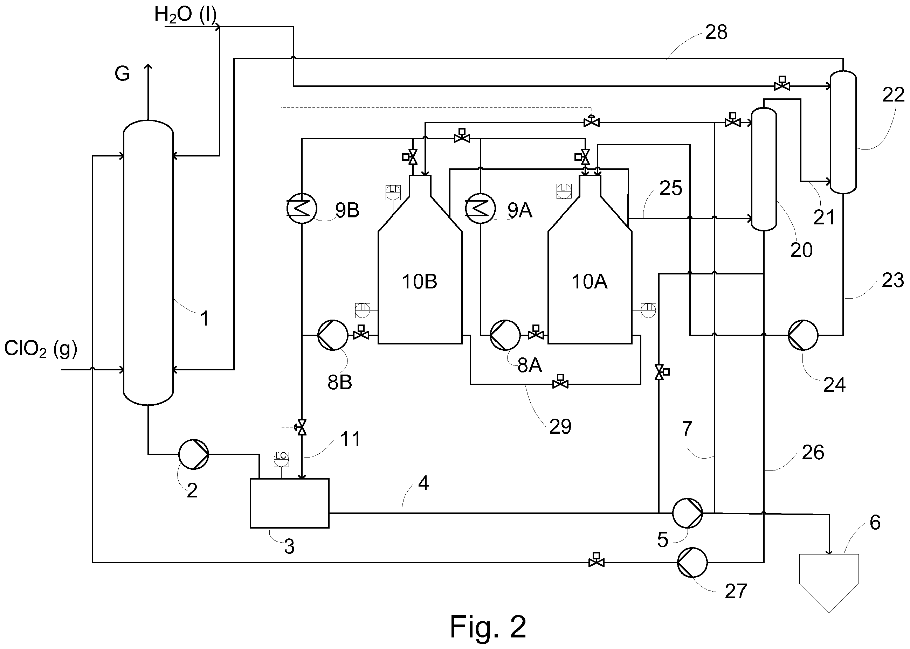

In another embodiment of the invention the process is run as a non-crystallising process. One mode of operating such a process is described below:
A primary reaction vessel holds a reaction medium at non-boiling conditions. Feed streams of aqueous sodium chlorate, sulfuric acid and a reducing agent like hydrogen peroxide enter the primary reaction vessel, separately or as mixtures of two or more thereof, while an inert gas like air is blown into the bottom. In the reaction medium sodium chlorate, reducing agent and acid react to form chlorine dioxide, sodium salt of the acid and optionally other by-products, depending on the reducing agent used. Chlorine dioxide and other gaseous products are withdrawn as a gas together with the inert gas. Depleted reaction medium is brought to a secondary reaction vessel also supplied with a feed stream of reducing agent and inert gas like air. Also here chlorine dioxide is produced in the reaction medium and is withdrawn with other gaseous products as a gas together with the inert gas, while depleted reaction medium is brought to a stripper supplied with inert gas like air to remove substantially all gas from the liquid. The absolute pressure maintained in the reaction vessels is preferably from about 50 to about 120 kPa, most preferably at substantially atmospheric pressure, and a preferred temperature is from about 30 to about 100°C. The acidity of the reaction medium in the reaction vessels is preferably maintained from about 4 to about 14 N. The concentration of alkali metal chlorate in the reaction medium in the first reaction vessel is preferably maintained from about 0.05 mole/litre to saturation, and in the second reaction vessel preferably from about 9 to about 75 mmoles/litre. The gas from the primary and secondary reaction vessels and the stripper is brought to an absorber operated as in a crystallising process. At least part of the chlorine dioxide water obtained in the absorber is brought to the end-application within an average residence time of less than 30 minutes. Figure 1 represents an embodiment, which is not according to the claimed invention. The invention is further illustrated by means of the appended Figure 2, schematically showing different embodiments of the invention.

Referring to Fig. 1, chlorine dioxide is continuously generated by means of any process, for example as described above, and is brought as a gas ClO₂ (g) to an absorption tower 1 in which it is absorbed by water H₂O (l) and an aqueous solution of chorine dioxide, referred to as chlorine dioxide water, is obtained. The chlorine dioxide water is brought by means of an absorber pump 2 to a pump tank 3 with relatively short residence time and further through line 4 by means of a chlorine dioxide feed pump 5 to the final application 6, for example a bleach plant at a pulp mill. Non-absorbed gas G is withdrawn from the absorption tower 1. When the demand for chlorine dioxide is lower than the actual production, part of the chlorine dioxide water is brought via line 7 to a chlorine dioxide water storage tank 10. The chlorine dioxide water therein is maintained at a low temperature by circulating it through a cooler 9 by means of a storage circulation pump 8. If there is more than one storage tank they may be arranged in parallel and may be cooled one at the time or all together. When the demand for chlorine dioxide is higher than the actual production, chlorine dioxide water is brought from the storage tank 10 via line 11 to the pump tank 3 and then further to the final application. The process may also be operated in a similar way without a pump tank.

Referring to Fig. 2, chlorine dioxide is generated and an aqueous solution thereof is obtained in a first absorption tower 1 and brought by means of an absorber pump 2 to a pump tank 3 and further through line 4 by means of a chlorine dioxide feed pump 5 to the final application 6, as described in connection to Fig. 1. When the demand for chlorine dioxide is lower than the actual production, part of the chlorine dioxide water is brought through line 7 and then further divided into two portions. One portion is brought to a stripper 20, in which gaseous chlorine dioxide is stripped off by means of air 25. Optionally the pH of the chlorine dioxide water brought to the stripper 20 may first be adjusted to be in the range from 6 to 8 to lower the volatility of acidic impurities. The gaseous chlorine dioxide is brought through line 21 to a second absorption tower 22 in which it is absorbed into water to form purified chlorine dioxide water that through line 23 and by a pump 24 is brought to a first storage tank 10A. The other portion of stream 7, which in most case is larger than the first portion, is brought to a second storage tank 10B. The first storage tank 10A contains chlorine dioxide water of higher purity and thereby higher storage stability than the chlorine dioxide water in the second storage tank 10B. The air 25 used in the stripper 20 is vented from the storage tanks 10A, 10B so chlorine dioxide degassed from the chlorine dioxide water therein is recovered. Remaining liquid from the striper 20 is brought via line 26 and pump 27 to the first absorption tower 1 to recover any chlorine dioxide therein. It is also possible to utilize remaining chlorine dioxide therein by bringing it to the final application. Non-absorbed gas from the second absorption tower 22 is brought through line 28 to the first absorption tower 1 to recover any chlorine dioxide therein. The chlorine dioxide water in the respective storage tank 10A, 10B is maintained at a low temperature by circulating it through coolers 9A, 9B by means of storage circulation pumps 8A, 8B. When the demand for chlorine dioxide is higher than the actual production, chlorine dioxide water is brought from the second storage tank 10B and/or the first storage tank 10A via line 11 to the pump tank 3 and then further to the final application. If desired, chlorine dioxide may also be brought from the first storage tank 10A to the second storage tank 10B, or vice versa, via line 29. In most cases it is advantageous to use the chlorine dioxide water from the second storage tank 10B to meet the normal variations in demand. The chlorine dioxide water in the first storage tank 10A is more stable and usually only a very small purge therefrom is necessary. The examples represent embodiments which are not according to the claimed invention. Parts and % relate to parts by weight and % by weight, respectively, unless otherwise stated.

### Examples

### Example 1

Chlorine dioxide solution with a concentration of around 5 g/dm³, but free from formic acid, methanol and chlorine, was collected in one-litre dark brown glass bottles from the absorber of a Mathieson plant. The stability of the chlorine dioxide was measured in a sample without any additions and in a sample in which about 0.15 g formic acid per gram chlorine dioxide had been added. The bottles were stored in a dark room at a temperature of 23°C. The ClO₂ content in each sample was measured spectrophotometrically during a 22-day period after 1, 3, and 22 days. The results are shown in the table below:

**Table 1**

| **Storage time (days)** | **ClO₂ water without additives % remaining ClO₂** | **ClO₂ water with added formic acid % remaining ClO₂** |
|---|---|---|
| 0 | 100 | 100 |
| 1 | 99.4 | 98.1 |
| 3 | 95.5 | 93.4 |
| 8 | 96.2 | 93.6 |
| 22 | 95.0 | 88.5 |

It appears that the rate of loss of chlorine dioxide is higher the first day than the following days. It also appears that the presence of formic acid, a common impurity in chlorine dioxide water from processes using methanol as reducing agent, increases the loss of chlorine dioxide. The higher concentration measured after 8 days than after 3 days may be within the error margin of the analyses.

### Example 2

Chlorine dioxide was produced by reduction of sodium chlorate with methanol in an SVP® process reactor operated at a pressure of 20 kPa absolute and 78 °C. The amount of added sodium chlorate was on average 1.669 ton sodium chlorate per ton chlorine dioxide. The acidity of the reaction medium was 6 N. The produced gaseous chlorine dioxide was absorbed in water to form aqueous chlorine dioxide, which was brought to a storage before reaching its end application, within a time period of 8-12 hours. A set-up according to the present application was arranged, wherein the produced aqueous chlorine dioxide instead was brought to its end application within less than 30 minutes. As can clearly be seen in Table 2 below, only an average of 1.623 ton sodium chlorate per ton chlorine dioxide needed to be added to realise the same amount of produced aqueous chlorine dioxide at the end application.

**Table 2**

| **Month** | **Consumption** (ton sodium chlorate per ton chlorine dioxide) | **Average of three months** (ton sodium chlorate per ton chlorine dioxide) |
|---|---|---|
| Three month prior to change | 1.681 | |
| Two month prior to change | 1.657 | |
| One month prior to change | 1.669 | **1.669** |
| First month after change | 1.627 | |
| Second month after change | Data not available | |
| Third month after change | 1.618 | |
| Forth month after change | 1.624 | **1.623** |

## Claims

1. A process for the production of chlorine dioxide by reducing chlorate ions in an acidic aqueous reaction medium using methanol as a reducing agent, the process comprising
- formation of an aqueous solution comprising chlorine dioxide by withdrawing gas comprising chlorine dioxide from the aqueous reaction medium and absorbing chlorine dioxide from said gas into water,
- bringing at least part of the aqueous solution comprising chlorine dioxide to its end-application within an average residence time of less than 30 minutes,
- maintaining part of the obtained aqueous solution comprising chlorine dioxide in at least one storage tank and maintaining it at a lower temperature than a temperature of the aqueous solution comprising chlorine dioxide brought thereto; wherein the aqueous solution comprising chlorine dioxide that is brought to the at least one storage tank is purified prior to entering the at least one storage tank by stripping off chlorine dioxide gas from the aqueous solution and then absorbing the chlorine dioxide into water to obtain a purified aqueous solution that is brought to the at least one storage tank.

2. The process as claimed in claim 1, wherein the average residence time in the at least one storage tank is from 1 day to 8 weeks.

3. The process as claimed in any one of the claims 1-2, further comprising bringing the aqueous solution comprising chlorine dioxide to a pump tank and bringing at least part of the aqueous solution from the pump tank to the end application.

4. The process as claimed in claim 3, wherein the average residence time in the pump tank is shorter than the average residence time in the at least one storage tank.

5. The process as claimed in claim 4, wherein the average residence time in the pump tank is from 1 to 40 minutes.

6. The process as claimed in any one of the preceding claims, wherein the temperature of the water used for absorbing chlorine dioxide is from 0 to 16 °C.

7. The process as claimed in any one of the preceding claims, wherein the temperature of the aqueous solution comprising chlorine dioxide in the at least one storage tank is maintained from 0 to 12°C.

## Patentansprüche

1. Verfahren zur Herstellung von Chlordioxid durch Reduzieren von Chlorationen in einem sauren wässrigen Reaktionsmedium unter Einsatz von Methanol als Reduktionsmittel, wobei das Verfahren Folgendes umfasst:
- Bildung einer Chlordioxid enthaltenden wässrigen Lösung durch das Abziehen von Chlordioxid enthaltendem Gas aus dem wässrigen Reaktionsmedium und Aufnehmen von Chlordioxid aus dem Gas in Wasser,
- Zuführen von mindestens einem Teil der Chlordioxid enthaltenden wässrigen Lösung zu ihrer endgültigen Anwendung innerhalb einer durchschnittlichen Verweilzeit von weniger als 30 Minuten,
- Halten eines Teils der gewonnenen Chlordioxid enthaltenden wässrigen Lösung in mindestens einem Speicherbehälter und Halten derselben auf einer geringeren Temperatur als einer Temperatur der Chlordioxid enthaltenden wässrigen Lösung, die diesem zugeführt wird; wobei die Chlordioxid enthaltende wässrige Lösung, die dem mindestens einen Speicherbehälter zugeführt wird, vor dem Eintreten in den mindestens einen Speicherbehälter gereinigt wird, indem Chlordioxidgas von der wässrigen Lösung abgestreift wird und danach das Chlordioxid in Wasser aufgenommen wird, um eine gereinigte wässrige Lösung zu gewinnen, die dem mindestens einen Speicherbehälter zugeführt wird.

2. Verfahren nach Anspruch 1, wobei die durchschnittliche Verweilzeit in dem mindestens einen Speicherbehälter zwischen 1 Tag und 8 Wochen beträgt.

3. Verfahren nach einem der Ansprüche 1-2, das weiterhin das Zuführen der Chlordioxid enthaltenden wässrigen Lösung zu einem Pumpbehälter und das Zuführen von mindestens einem Teil der wässrigen Lösung aus dem Pumpbehälter zu der endgültigen Anwendung umfasst.

4. Verfahren nach Anspruch 3, wobei die durchschnittliche Verweilzeit in dem Pumpbehälter kürzer als die durchschnittliche Verweilzeit in dem mindestens einen Speicherbehälter ist.

5. Verfahren nach Anspruch 4, wobei die durchschnittliche Verweilzeit in dem Pumpbehälter zwischen 1 und 40 Minuten beträgt.

6. Verfahren nach einem der vorhergehenden Ansprüche, wobei die Temperatur des zur Aufnahme von Chlordioxid eingesetzten Wassers zwischen 0 und 16°C liegt.

7. Verfahren nach einem der vorhergehenden Ansprüche, wobei die Temperatur der Chlordioxid enthaltenden wässrigen Lösung in dem mindestens einen Speicherbehälter zwischen 0 und 12°C gehalten wird.

## Revendications

1. Procédé de production de dioxyde de chlore en réduisant des ions chlorate dans un milieu réactionnel aqueux acide en utilisant le méthanol en tant qu'agent réducteur, le procédé comprenant le fait
- de former une solution aqueuse comprenant du dioxyde de chlore en retirant un gaz comprenant du dioxyde de chlore du milieu réactionnel aqueux et en absorbant le dioxyde de chlore dudit gaz dans l'eau,
- à amener au moins une partie de la solution aqueuse comprenant du dioxyde de chlore à son application finale pendant un temps de séjour moyen inférieur à 30 minutes,
- à maintenir une partie de la solution aqueuse obtenue comprenant du dioxyde de chlore dans au moins un réservoir de stockage et la maintenir à une température inférieure à une température de la solution aqueuse comprenant du dioxyde de chlore amenée dans celui-ci ; où la solution aqueuse comprenant du dioxyde de chlore qui est amenée dans l'au moins un réservoir de stockage est purifiée avant d'entrer dans l'au moins un réservoir de stockage en éliminant le dioxyde de chlore gazeux de la solution aqueuse puis en absorbant le dioxyde de chlore dans l'eau pour obtenir une solution aqueuse purifiée qui est amenée dans l'au moins un réservoir de stockage.

2. Procédé tel que revendiqué dans la revendication 1, dans lequel le temps de séjour moyen dans l'au moins un réservoir de stockage est compris entre 1 jour et 8 semaines.

3. Procédé tel que revendiqué dans l'une quelconque des revendications 1 et 2, comprenant en outre le fait d'amener la solution aqueuse comprenant du dioxyde de chlore dans un réservoir-pompe et d'amener au moins une partie de la solution aqueuse du réservoir-pompe à l'application finale.

4. Procédé tel que revendiqué dans la revendication 3, dans lequel le temps de séjour moyen dans le réservoir-pompe est plus court que le temps de séjour moyen dans l'au moins un réservoir de stockage.

5. Procédé tel que revendiqué dans la revendication 4, dans lequel le temps de séjour moyen dans le réservoir-pompe est compris entre 1 et 40 minutes.

6. Procédé tel que revendiqué dans l'une quelconque des revendications précédentes, dans lequel la température de l'eau utilisée pour absorber le dioxyde de chlore est comprise entre 0 et 16°C.

7. Procédé tel que revendiqué dans l'une quelconque des revendications précédentes, dans lequel la température de la solution aqueuse comprenant du dioxyde de chlore dans l'au moins un réservoir de stockage est maintenue entre 0 et 12°C.
